# EUROPEAN PATENT APPLICATION

(11) **EP 4 495 624 A1**
(43) Date of publication of application: **22.01.2025**
(21) Application number: 24156987.0
(22) Date of filing: 12.02.2024
(51) Int. Cl.: G01S 7/481, G01S 17/931, B60R 11/00

(54) **LIDAR SYSTEM FOR VEHICLES**

(30) Priority: 19.07.2023 KR 20230093714
(71) Applicant: Hyundai Mobis Co., Ltd., Gangnam-gu Seoul 06141 (KR)
(72) Inventor: BYUN, Jae Sup, Yongin-si, Gyeonggi-do 16891 (KR); KIM, Jang Ho, Yongin-si, Gyeonggi-do 16891 (KR)
(74) Representative: Frenkel, Matthias Alexander

(57) **Abstract**

A Light Detection and Ranging (LiDAR) system for vehicles is provided. The LiDAR system includes: a housing (100) having an opening formed in a front and guide grooves (131) formed in each of upper and lower parts; a door (200) to slide along the guide grooves and open and close the opening; a LiDAR unit (300) to slide forward and rearward within the housing to be selectively exposed to the outside through the opening; a first link unit (400) to slide the door; a second link unit (500) to slide the LiDAR unit; and a gear unit () to transmit power of an actuator to the first link unit and the second link unit. The door and the LiDAR unit move in conjunction with each other to be alternately disposed at the opening.

## Description

### CROSS-REFERENCE TO RELATED APPLICATION

This application claims priority to and the benefit of Korean Patent Application No. 10-2023-0093714, filed on July 19, 2023, in the Korean Intellectual Property Office, the disclosure of which is incorporated herein by reference in its entirety for all purposes.

### BACKGROUND

### 1. Field

The present invention relates to a LiDAR system for vehicles, and more specifically, to a LiDAR system for vehicles installed on a structure of a vehicle.

### 2. Description of Related Art

With the development of vehicle technology, functions such as autonomous parking as well as autonomous driving are being demanded. To perform the functions, a need for a LiDAR (Light Detection and Ranging) is increasing. In general, the LiDAR is mounted on structures such as a bumper or grill of a vehicle and detect objects or structures by sensing the front and rear of the vehicle. However, since the LiDAR is mounted in a state of being exposed to the outside of the vehicle, foreign substances such as dust may attach to a surface when the vehicle is moving. Consequently, problems such as the accuracy of the sensor's measurement values being reduced and the surrounding environment itself not being recognized occur. Therefore, there is a need to resolve the problems.

### SUMMARY

The present invention is directed to providing a LiDAR system for vehicles capable of preventing a LiDAR from being contaminated by deploying the LiDAR outside a vehicle only when operation of the LiDAR is required, such as in an autonomous driving mode.

Problems to be solved by the present invention are not limited to those mentioned above, and other problems not mentioned will be clearly understood by those skilled in the art from the following description.

This Summary is provided to introduce a selection of concepts in simplified form that are further described below in the Detailed Description. This Summary is not intended to identify key features or essential features of the claimed subject matter, nor is it intended to be used as an aid in determining the scope of the claimed subject matter.

In a general aspect of the disclosure, a Light Detection and Ranging (LiDAR) system for vehicles, includes: a housing having an opening formed in a front and guide grooves formed in each of upper and lower parts; a door configured to slide along the guide grooves and open and close the opening; a LiDAR unit configured to slide forward and rearward within the housing to be selectively exposed to the outside through the opening; a first link unit configured to slide the door; a second link unit configured to slide the LiDAR unit; and a gear unit configured to transmit power of an actuator to the first link unit and the second link unit, wherein the door and the LiDAR unit are configured to move in conjunction with each other to be alternately disposed at the opening.

The gear unit may include: a first gear unit including a first shaft connected to the actuator, a first lower gear provided at a lower portion of the first shaft, and a first upper gear provided at an upper portion of the first shaft; and a second gear unit including a second shaft disposed in parallel with the first shaft, a second lower gear provided at a lower portion of the second shaft and engaged with to the first lower gear, and a second upper gear provided at an upper portion of the second shaft and engaged with the first upper gear, wherein the second lower gear may be connected to the first link unit, and the second upper gear is connected to the second link unit.

Outer circumferential surfaces of the first lower gear and the first upper gear may each be divided into an operating section in which first teeth are formed and an idling section in which a rim is formed, wherein each of the second lower gear and the second upper gear may include second teeth formed on an outer circumferential surface and engaged with the first teeth and a contactor contacting the rim, wherein the rim and the contactor may be provided in structures that protrude radially from upper portions of the first teeth and the second teeth, respectively.

As the first lower gear and the first upper gear rotate, the first teeth may engage with the second teeth in the operating section so that the second lower gear and the second upper gear rotate, and the rim may be configured to contact the contactor and slide in the idling section so that the second lower gear and the second upper gear do not rotate.

The operating section in the first lower gear and the operating section in the first upper gear may be disposed at different positions in a circumferential direction.

The rim may have an outer surface that protrudes and is curved in an arc shape, and the contactor may have an outer surface that is concave and curved in an arc shape.

The link unit may include: a pair of guide links, one ends of which are rotatably connected to one side and the other side of a bottom surface of the door and the other ends of which are provided with sliding pins and connected to a sliding groove provided in a lower portion of the housing; a connecting link having one end and the other end rotatably connected to the other ends of the pair of guide links, respectively; a first door driving link having one end connected to the second lower gear and rotating together with the second lower gear; and a second door driving link having one end rotatably connected to the other end of the first door driving link and the other end rotatably connected to the connecting link.

The second link unit may include: a first LiDAR driving link having one end connected to the second upper gear and rotating together with the second upper gear; and a second LiDAR driving link having one end rotatably connected to the other end of the first LiDAR driving link and the other end rotatably connected to the LiDAR unit.

The guide groove may include a first movement section straightly disposed in a left-right direction behind the opening and a second movement section curvedly extending in a front-rear direction from the first movement section toward the opening, and the door may include guide pins connected to the guide grooves on upper and lower surfaces.

The LiDAR system may further include: a guide bracket connected to a protrusion guide provided on each of both side surfaces of the LiDAR unit, wherein the guide bracket may be configured to guide forward and rearward sliding movement of the LiDAR.

In another general aspect of the disclosure, a Light Detection and Ranging (LiDAR) system for vehicles, includes: a housing having an opening formed in a front and guide grooves formed in each of upper and lower parts; a door at the opening; a LiDAR unit retractably housed in the housing; a first link unit configured to slide the door; a second link unit configured to slide the LiDAR unit; a gear unit to transmit power; and a processor configured to: control the door to slide along the guide grooves and open and close the opening; control the LiDAR unit to slide forward and rearward within the housing to be selectively exposed to the outside through the opening; control the gear unit to transmit power of an actuator to the first link unit and the second link unit; and control movement of the door and the LiDAR unit to move in conjunction with each other to be alternately disposed at the opening.

### BRIEF DESCRIPTION OF THE DRAWINGS

FIG. 1 is a view schematically illustrating a LiDAR system for vehicles according to an embodiment of the present invention;
FIG. 2 is a view schematically illustrating components of the LiDAR system for vehicles according to the embodiment of the present invention;
FIG. 3 is a view schematically illustrating a housing in FIG. 2;
FIG. 4 is a view schematically illustrating a state in which a door is disposed in an opening of the housing;
FIG. 5 is a view schematically illustrating a first link unit and a gear unit connected to the door;
FIG. 6 is a view schematically illustrating a lower cover of the housing including guide grooves and a sliding groove;
FIGS. 7A and 7B are views schematically illustrating a state in which the door closes the opening and a state in which the door opens the opening, respectively, by operation of the first link unit;
FIG. 8 is a view schematically illustrating a connection structure between a LiDAR and a guide bracket;
FIGS. 9A and 9B are views schematically illustrating a first lower gear (first upper gear);
FIGS. 9C and 9D are views schematically illustrating a second lower gear (second upper gear);
FIG. 10 is a view illustrating operation of the second lower gear in an operating section and an idling section of the first lower gear;
FIG. 11 is a view illustrating operation of the second lower gear and the second upper gear according to the rotation of the first lower gear and the first upper gear;
FIG. 12 is an operational view illustrating a state in which the door opens the opening; and
FIG. 13 is an operational view illustrating a state in which the LiDAR is deployed to the outside by passing through the opening.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present disclosure will be defined only by the scope of the appended claims. Meanwhile, the terms used in the present specification are for explaining the embodiments, not for limiting the present disclosure.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

In a description of the embodiment, in a case in which any one element is described as being formed on or under another element, such a description includes both a case in which the two elements are formed in direct contact with each other and a case in which the two elements are in indirect contact with each other with one or more other elements interposed between the two elements. In addition, when one element is described as being formed on or under another element, such a description may include a case in which the one element is formed at an upper side or a lower side with respect to another element.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Hereinafter, embodiments of the present invention will be described in detail with reference to the accompanying drawings, and components which are the same or correspond to each other will be denoted by the same or corresponding reference numerals in all drawings, and redundant descriptions will be omitted.

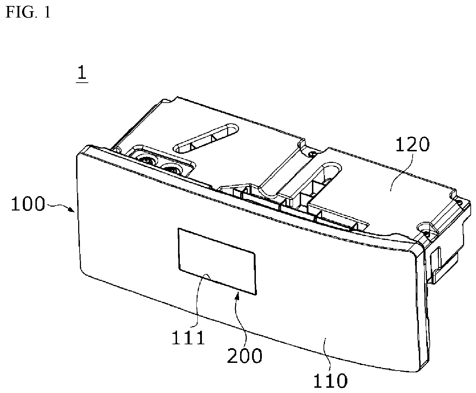

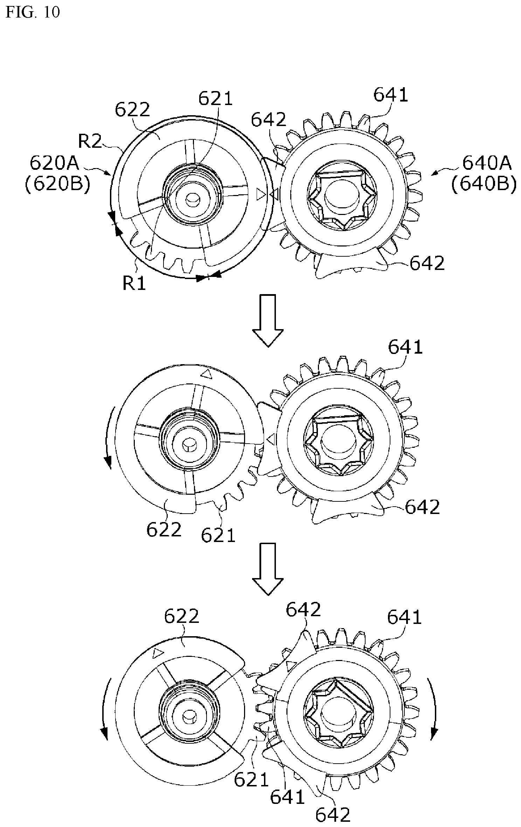

FIGS. 1 to 11 schematically illustrate a LiDAR system for vehicles and components constituting the LiDAR system for vehicles according to an embodiment of the present invention.

A LiDAR system 1 for vehicles according to an embodiment of the present invention may be installed on a structure of a vehicle that is not shown. For example, the LiDAR system 1 may be installed on the back of a vehicle's grill, bumper cover, or the like.

Referring to the drawings, the LiDAR system 1 for vehicles according to the embodiment of the present invention may include a housing 100, a door 200, a LiDAR 300, a first link unit 400, and a second link unit 500, and a gear unit 600.

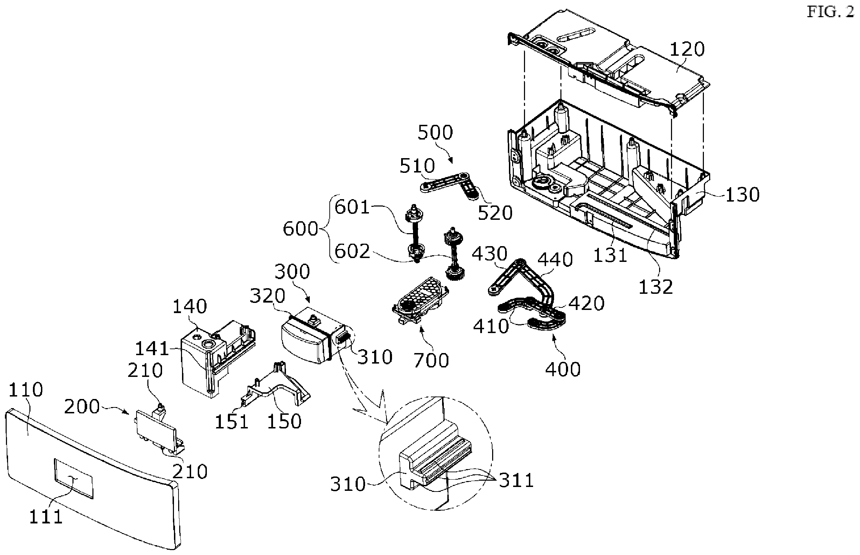

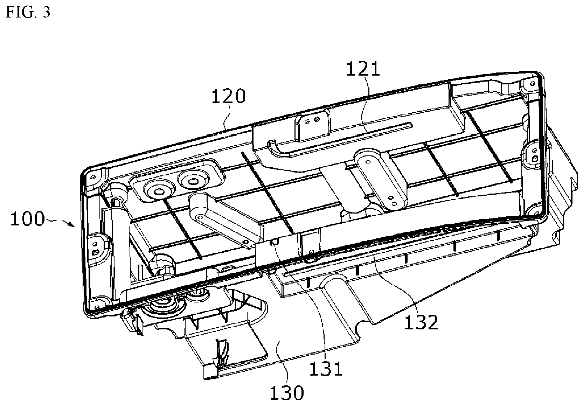

As illustrated in FIGS. 2 and 3, the housing 100 may have an approximately box-shaped structure with an internal space. The door 200, the LiDAR 300, the first link unit 400, the second link unit 500, and the gear unit 600 may be accommodated in the internal space.

An opening 111 may be formed in a front cover 110, which is a front of the housing 100, and guide grooves 121 and 131 may be formed in an upper cover 120 and a lower cover 130. In addition, a sliding groove 132 may be formed in the lower cover 130.

The housing 100 may be provided so that the opening 111 is exposed through the grill or bumper cover in a state of being installed on the grill or bumper cover.

The door 200 and the LiDAR 300 may be disposed inside the housing 100 and configured to move in conjunction with each other to be alternately disposed at the opening 111.

That is, when the vehicle is not in an autonomous driving mode, the LiDAR 300 is accommodated inside the housing 100, and the opening 111 is closed by disposing the door 200 at the opening 111, so that the LiDAR 300 is prevented from being contaminated or damaged by external foreign substances. Then, when the vehicle is switched to the autonomous driving mode, the door 200 opens the opening 111, and the LiDAR 300 accommodated inside the housing 100 is disposed at the opening 111 to be deployed to the outside through the opening 111.

The door 200 is disposed in the housing 100 and configured to slide along the guide grooves 121 and 131 to selectively open or close the opening 111.

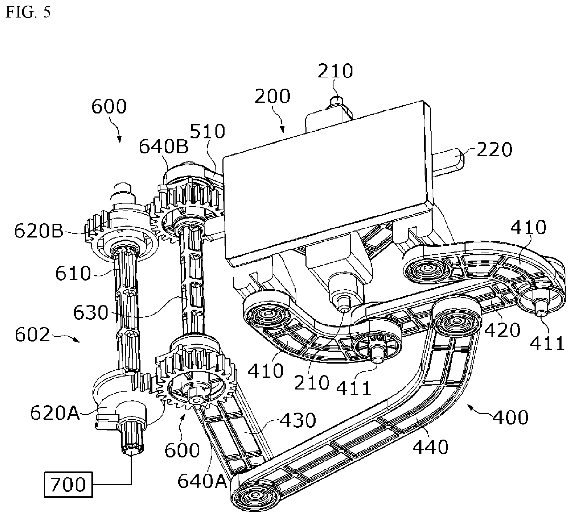

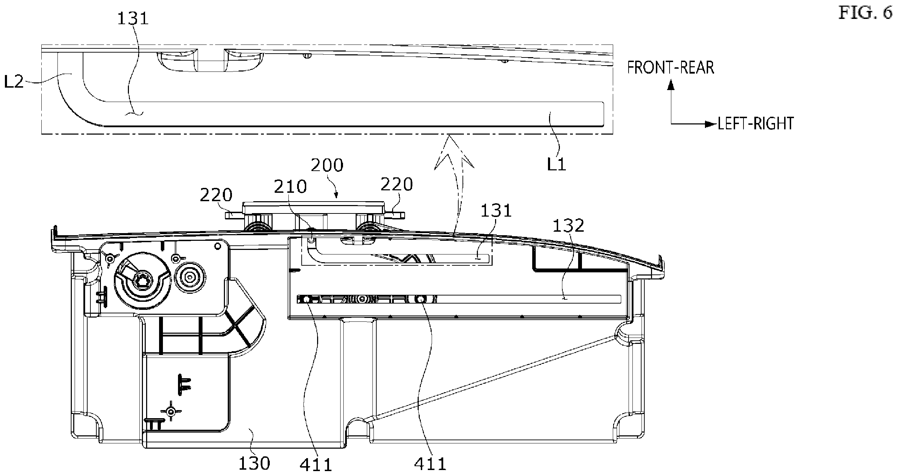

Referring to FIGS. 5 and 6, the door 200 may have guide pins 210 connected to the guide grooves 121 and 131 on upper and lower surfaces.

The guide pins 210 may be provided in a structure that protrudes from the upper and lower surfaces of the door 200, respectively, and the door 200 may slide along a trajectory provided by the guide grooves 121 and 131 through the guide pins 210.

The guide grooves 121 and 131 may include a first movement section L1 straightly disposed in a left-right direction behind the opening 111 and a second movement section L2 curvedly extending in a front-rear direction from the first movement section L1 toward the opening 111.

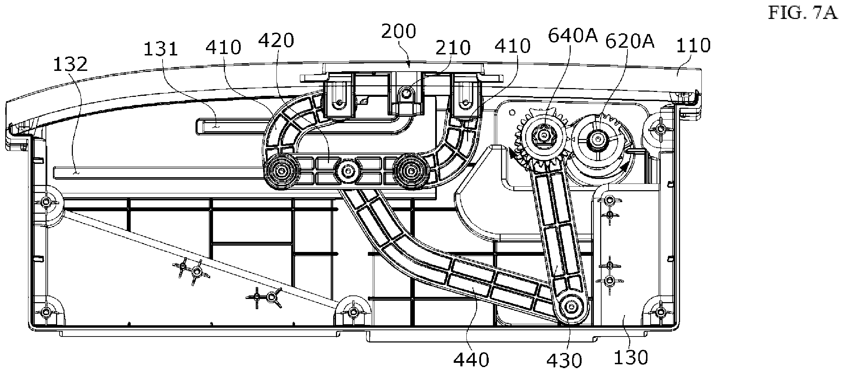

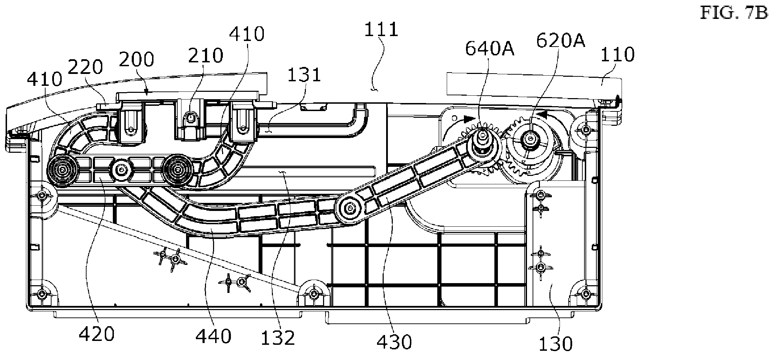

Accordingly, as illustrated in FIGS. 7A and 7B, in a state in which the door 200 is disposed at the opening 111 to close the opening 111, the door 200 may open the opening 111 by moving rearward toward the inside of the housing 100 along the second movement section L2 and moving to the right (or left) along the first movement section L1, and may be hidden on the back surface of the front cover 110. In addition, the door 200 may close the opening 111 by moving to the left (or right) along the first movement section L1 and moving forward toward the outside of the housing 100 along the second movement section L2.

The door 200 may have a stopper 220 on each of both side surfaces.

The stopper 220 may serve to prevent the door 200 from further moving forward by being provided to contact the back surface of the front cover 110 in the state in which the door 200 is disposed at the opening 111 to close the opening 111.

The LiDAR 300 is configured to slide forward and rearward within the housing 100 to be selectively exposed to the outside through the opening 111.

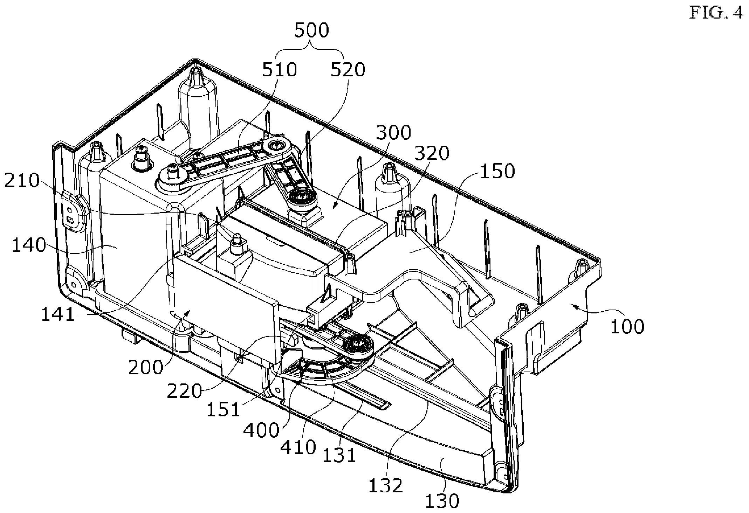

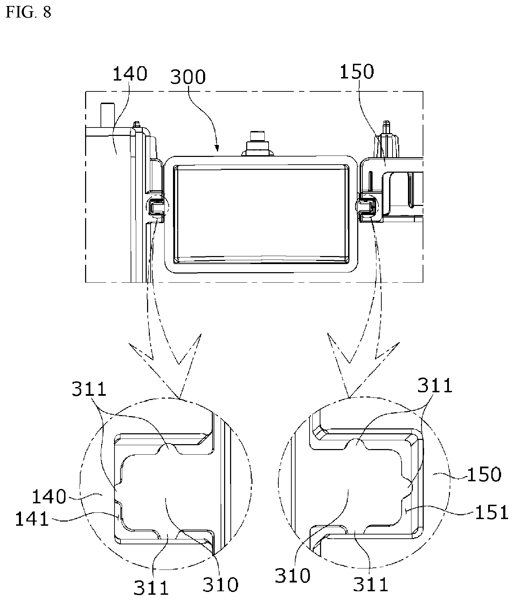

Referring to FIGS. 4 and 8, guide brackets 140 and 150 may be provided within the housing 100 to allow the LiDAR 300 to slide forward and rearward. A pair of guide brackets 140 and 150 may be provided, disposed on both left and right sides of the LiDAR 300, respectively, and configured to guide forward and rearward sliding movement of the LiDAR 300.

The guide brackets 140 and 150 may include bracket grooves 141 and 151 connected to the LiDAR 300. The bracket grooves 141 and 151 may be formed to extend in the front-rear direction toward the opening 111.

In addition, the LiDAR 300 may be provided with protruding guides 310 on both side surfaces and connected to the bracket grooves 141 and 151 of the guide brackets 140 and 150.

The protrusion guides 310 are provided in an approximately square structure corresponding to the cross-sectional shape of the bracket grooves 141 and 151, and are configured to have protrusion structures 311 formed on surfaces facing the inner surfaces of the bracket grooves 141 and 151 to make point contact with the inner surfaces of the bracket grooves 141 and 151. In this way, the generation of frictional force may be minimized when the LiDAR 300 slides along the bracket grooves 141 and 151 through the protrusion guides 310.

The LiDAR 300 may be provided with a stopper 220 protruding along a perimeter thereof.

The stopper 220 may serve to prevent the LiDAR 300 from further moving forward by being provided to contact a back surface of the front cover 110 in a state in which the LiDAR 300 is disposed at the opening 111 by moving forward.

Sliding movement of the door 200 and the LiDAR 300 may be implemented through the first link unit 400, the second link unit 500, and the gear unit 600.

The first link unit 400 may be connected to the door 200 and configured to slide the door 200.

Referring to FIGS. 5, 7A, and 7B, the first link unit 400 may include a guide link 410, a connecting link 420, a first door driving link 430, and a second door driving link 440.

A pair of guide links 410 may be provided, and one ends thereof may be rotatably connected to one side and the other side of a bottom surface of the door 200, respectively, with respect to the guide pin 210, and the other ends may be provided with sliding pins 411 and connected to the sliding groove 132 provided in the lower cover 130 of the housing 100. Each of the sliding pins 411 may be provided in a structure that protrudes downward from a lower surface of the guide link 410 at the other end thereof.

One end and the other end of the connecting link 420 may be rotatably connected to the other ends of the pair of guide links 410, respectively. In this case, the connecting link 420 may be connected to the other surfaces of the guide links 410 opposite to the surfaces where the sliding pin 411 is provided at the other ends of the guide links 410. That is, the connecting link 420 may be connected to upper surfaces of the guide links 410 at the other ends thereof.

The first door driving link 430 may be connected to the gear unit 600 and rotate by power of an actuator 700 transmitted through the gear unit 600. In an example, the first door driving link 430 may have one end connected to a second lower gear 640A of the gear unit 600 and rotate together with the second lower gear 640A using the second lower gear 640A as a rotation axis.

The second door driving link 440 may have one end rotatably connected to the other end of the first door driving link 430, and the other end rotatably connected to the connecting link 420.

The second door driving link 440 implements sliding movement of the door 200 in the left-right direction by converting a rotational movement of the first door driving link 430 into a linear movement in the left-right direction based on the opening 111 in conjunction with the connecting link 420 and causing the guide link 410 to linearly reciprocate along the sliding groove 132 together with the connecting link 420. In this case, the door 200 slides while maintaining a state in which its front surface faces forward.

The second link unit 500 may be connected to the LiDAR 300 and configured to slide the LiDAR 300.

Referring to FIG. 4, the second link unit 500 may include a first LiDAR driving link 510 and a second LiDAR driving link 520.

The first LiDAR driving link 510 may be connected to the gear unit 600 and rotate by power of the actuator 700 transmitted through the gear unit 600. In an example, the first LiDAR driving link 510 may have one end connected to a second upper gear 640B of the gear unit 600 and rotate together with the second upper gear 640B using the second upper gear 640B as a rotation axis.

The second LiDAR driving link 520 may have one end rotatably connected to the other end of the first LiDAR driving link 510, and the other end rotatably connected to the LiDAR 300.

The second LiDAR driving link 520 implements sliding movement of the LiDAR 300 in the front-rear direction by converting a rotational movement of the first LiDAR driving link 510 into a linear movement in the front-rear direction based on the opening 111.

The gear unit 600 may be configured to transmit power of the actuator 700 to the first link unit 400 and the second link unit 500.

The gear unit 600 may include a first gear unit 601 and a second gear unit 602.

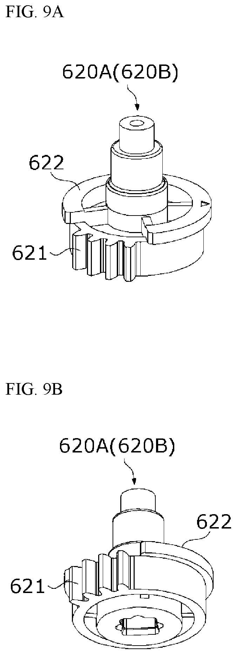

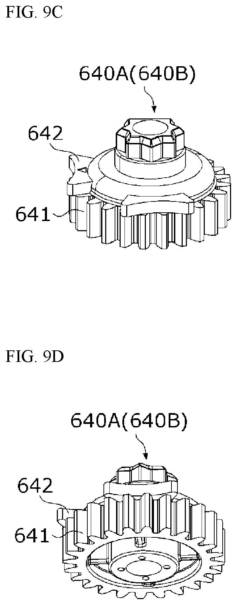

Referring to FIGS. 9 to 11 together with FIG. 5, the first gear unit 601 may rotate by being connected to the actuator 700, and the second gear unit 602 may transmit power of the actuator 700 to the first link unit 400 and the second link unit 500 by being connected to the first gear unit 601.

The first gear unit 601 may include a first shaft 610 connected to the actuator 700, a first lower gear 620A provided at a lower portion of the first shaft 610, and a first upper gear 620B provided at an upper portion of the first shaft 610. The first lower gear 620A and the first upper gear 620B are fitted and fixed to the first shaft 610 and configured to rotate integrally with the first shaft 610.

The second gear unit 602 may include a second shaft 630 disposed in parallel with the first shaft 610, a second lower gear 640A provided at a lower portion of the second shaft 630, and a second upper gear 640B provided at an upper portion of the second shaft 630. The second lower gear 640A and the second upper gear 640B are each rotatably connected to the second shaft 630 and configured to rotate individually.

The first lower gear 620A and the second lower gear 640A may be engaged with each other, and the first upper gear 620B and the second upper gear 640B may be engaged with each other.

The second lower gear 640A may be connected to the first link unit 400, and the second upper gear 640B may be connected to the second link unit 500. In detail, the second lower gear 640A may be connected to the first door driving link 430 of the first link unit 400, and the second upper gear 640B may be connected to the first LiDAR driving link 510 of the second link unit 500. In this case, the first door driving link 430 may be fitted into the second lower gear 640A to form binding, and the first LiDAR driving link 510 may be fitted into the second upper gear 640B to form binding.

The first shaft 610 rotates as one end thereof is connected to the actuator 700, and the first lower gear 620A and the first upper gear 620B integrally rotate together with the first shaft 610. In addition, the second lower gear 640A engages with the first lower gear 620A and rotates about the second shaft 630, and the second upper gear 640B engages with the first upper gear 620B and rotates about the second shaft 630.

Outer circumferential surfaces of the first lower gear 620A and the first upper gear 620B may each be divided into an operating section R1 where first teeth 621 are formed and an idling section R2 where a rim 622 is formed. Specifically, the first teeth 621 may be formed in a section that is a part of the outer circumferential surface of each of the first lower gear 620A and the first upper gear 620B, and the rim 622 may be formed in a remaining part. In addition, a part of the section where the first teeth 621 are formed may correspond to the operating section R1, and the remaining section where the rim 622 is formed may correspond to the idling section R2.

The rim 622 may be formed in a structure that protrudes radially from an upper portion of the first teeth 621. That is, the rim 622 may be positioned at a higher level than the first teeth 621. In addition, the rim 622 may have an outer surface that protrudes and is curved in an arc shape.

Each of the second lower gear 640A and the second upper gear 640B may include second teeth 641 formed on an outer circumferential surface thereof and engaged with the first teeth 621 and a contactor 642 contacting the rim 622. Specifically, the second teeth 641 may be formed along the outer circumferential surface of each of the second lower gear 640A and the second upper gear 640B, and the contactor 642 may be formed in a structure that protrudes radially from an upper portion of the second teeth 641.

In an example, at least one contactor 642 may be provided in a section that is a part of the outer circumferential surface of each of the second lower gear 640A and the second upper gear 640B. The present example illustrates that two contactors 642 are provided spaced apart at a predetermined interval, but is not limited thereto. In addition, the contactor 642 may have an outer surface that is concave and curved in an arc shape corresponding to a shape of the outer surface of the rim 622.

As the first lower gear 620A and the first upper gear 620B rotate, in the operating section R1, the first teeth 621 engage with the second teeth 641 of the second lower gear 640A and the second upper gear 640B, so that the second lower gear 640A and the second upper gear 640B are rotated. That is, as the first teeth 621 engage with the second teeth 641 in the operating section R1, the second lower gear 640A and the second upper gear 640B rotate together with the first lower gear 620A and the first upper gear 620B.

In addition, the rim 622 of each of the first lower gear 620A and the first upper gear 620B contacts the contactor 642 and slides in the idling section R2, so that the second lower gear 640A and the second upper gear 640B do not rotate. That is, in the idling section R2, as the second teeth 641 do not engage with the first teeth 621 and the contactor 642 and the rim 622 slide against each other in a state of being in contact with each other, the second lower gear 640A and the second upper gear 640B do not rotate, and the first lower gear 620A and the first upper gear 620B idle.

Meanwhile, the operating section R1 in the first lower gear 620A and the operating section R1 in the first upper gear 620B may be disposed at different positions in a circumferential direction. Specifically, when viewed from above about the first shaft 610, the operating section R1 provided with the first teeth 621 of the first lower gear 620A and the operating section R1 provided with the first teeth 621 of the first upper gear 620B may be disposed not to overlap each other but to be offset. For example, the operating sections may be disposed so that the operating section R1 of the first upper gear 620B begins after the operating section R1 of the first lower gear 620A ends based on a clockwise direction.

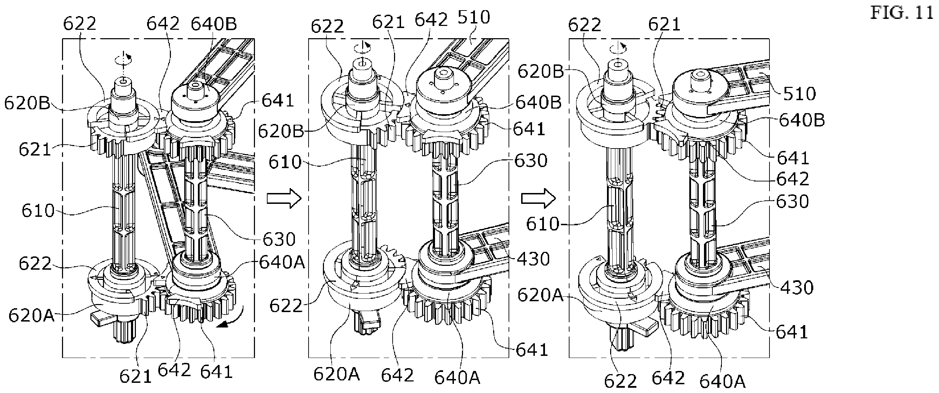

Accordingly, as illustrated in FIG. 11, when the first lower gear 620A and the first upper gear 620B rotate counterclockwise about the first shaft 610, the second lower gear 640A and the second upper gear 640B sequentially rotate by the operating section R1 of the first lower gear 620A and the operating section R1 of the first upper gear 620B.

That is, the second lower gear 640A that meets the operating section R1 of the first lower gear 620A rotates together with the first lower gear 620A, and the second upper gear 640B that meets the idling section R2 of the first upper gear 620B is stopped in a non-rotated state, and only the first upper gear 620B idles.

In addition, the second lower gear 640A that meets the idling section R2 of the first lower gear 620A is stopped in the non-rotated state, only the first lower gear 620A idles, and the second upper gear 640B that meets the operating section R1 of the first upper gear 620B rotates together with the first upper gear 620B.

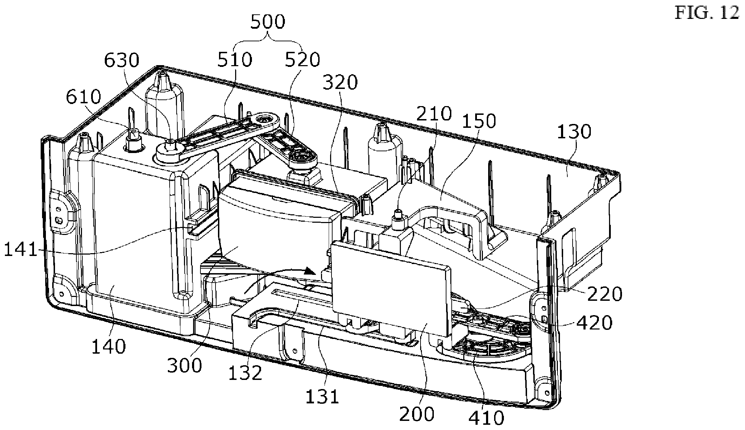

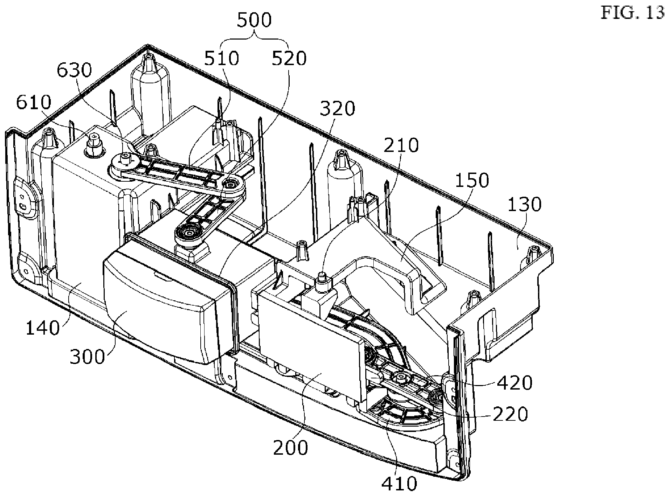

The operation of the LiDAR system for vehicles according to an embodiment of the present invention will be described with reference to FIGS. 12 and 13.

Conversely, when the first lower gear 620A and the first upper gear 620B rotate clockwise, the second upper gear 640B rotates first, and when the second upper gear 640B stops rotating, the lower gear 640A rotates.

FIG. 12 is an operational view illustrating a state in which the door opens the door, and FIG. 13 is an operational view illustrating a state in which the LiDAR is deployed to the outside by passing through the opening.

As illustrated in FIG. 12, when the actuator operates and the first gear unit rotates, the second lower gear engaged with the first lower gear in the operating section rotates and moves the first link unit, and the door 200 connected to the first link unit slides, so that the opening is opened.

The second upper gear engaged with the first upper gear in the idling section is stopped without rotating as the first upper gear idles, and the LiDAR connected to the second link unit maintains a state of being stored in the housing.

As illustrated in FIG. 13, in a state in which the door opens the opening, the second lower gear engaged with the first lower gear in the idling section is stopped without rotating as the first lower gear idles, and when the second upper gear engaged with the first upper gear in the operating section rotates and moves the second link unit, the LiDAR connected to the second link unit slides and is deployed to the outside through the opening.

Then, when the autonomous driving mode ends, the actuator operates, and when the first gear unit rotates in the opposite direction, the second upper gear rotates first and stores the LiDAR inside the housing in conjunction with the second link unit, and the second lower gear rotates and slides the door in conjunction with the first link unit, so that the opening is closed.

As described above, according to an embodiment of the present invention, by configuring the LiDAR to be selectively deployed outside a vehicle or stored inside the vehicle depending on a driving mode of the vehicle, it is possible to prevent the performance of the LiDAR from deteriorating due to contamination by external foreign substances.

In addition, by blocking the opening through which the LiDAR is deployed to the outside with the door in a state in which the LiDAR is stored, it is possible to protect the LiDAR from external environments and to prevent occurrence of a design difference on the exterior of the vehicle due to the opening being opened.

According to an embodiment of the present invention, it is possible to provide a LiDAR system for vehicles capable of preventing a LiDAR from being contaminated by deploying the LiDAR outside a vehicle only when operation of the LiDAR is required, such as in an autonomous driving mode.

The LiDAR system may include one or more processors (e.g., included in the LiDAR unit or the vehicle) that controls various components thereof. For example, a processor (not shown) may control the door to slide along the guide grooves and open and close the opening, control the LiDAR unit to slide forward and rearward within the housing to be selectively exposed to the outside through the opening, control the gear unit to transmit power of an actuator to the first link unit and the second link unit, and control movement of the door and the LiDAR unit to move in conjunction with each other to be alternately disposed at the opening.

An effect of the present invention is not limited to that mentioned above, and other effects not mentioned will be clearly understood by those skilled in the art from the description of claims.

## Claims

1. A Light Detection and Ranging (LiDAR) system for vehicles, the LiDAR system comprising:
a housing having an opening formed in a front and guide grooves formed in each of upper and lower parts;
a door configured to slide along the guide grooves and open and close the opening;
a LiDAR unit configured to slide forward and rearward within the housing to be selectively exposed to the outside through the opening;
a first link unit configured to slide the door;
a second link unit configured to slide the LiDAR unit; and
a gear unit configured to transmit power of an actuator to the first link unit and the second link unit,
wherein the door and the LiDAR unit are configured to move in conjunction with each other to be alternately disposed at the opening.

2. The LiDAR system of claim 1,
wherein the gear unit includes:
a first gear unit including a first shaft connected to the actuator, a first lower gear provided at a lower portion of the first shaft, and a first upper gear provided at an upper portion of the first shaft; and
a second gear unit including a second shaft disposed in parallel with the first shaft, a second lower gear provided at a lower portion of the second shaft and engaged with to the first lower gear, and a second upper gear provided at an upper portion of the second shaft and engaged with the first upper gear, and
wherein the second lower gear is connected to the first link unit, and the second upper gear is connected to the second link unit.

3. The LiDAR system of claim 2,
wherein outer circumferential surfaces of the first lower gear and the first upper gear are each divided into an operating section in which first teeth are formed and an idling section in which a rim is formed,
wherein each of the second lower gear and the second upper gear includes second teeth formed on an outer circumferential surface and engaged with the first teeth and a contactor contacting the rim, and
wherein the rim and the contactor are provided in structures that protrude radially from upper portions of the first teeth and the second teeth, respectively.

4. The LiDAR system of claim 3,
wherein as the first lower gear and the first upper gear rotate, the first teeth engage with the second teeth in the operating section so that the second lower gear and the second upper gear rotate, and
wherein the rim is configured to contact the contactor and slide in the idling section so that the second lower gear and the second upper gear do not rotate.

5. The LiDAR system of claim 3 or 4, wherein the operating section in the first lower gear and the operating section in the first upper gear are disposed at different positions in a circumferential direction.

6. The LiDAR system for vehicles of any one of claims 3 to 5, wherein the rim has an outer surface that protrudes and is curved in an arc shape, and the contactor has an outer surface that is concave and curved in an arc shape.

7. The LiDAR system of any one of claims 2 to 6, wherein the link unit includes:
a pair of guide links, one ends of which are rotatably connected to one side and the other side of a bottom surface of the door and the other ends of which are provided with sliding pins and connected to a sliding groove provided in a lower portion of the housing;
a connecting link having one end and the other end rotatably connected to the other ends of the pair of guide links, respectively;
a first door driving link having one end connected to the second lower gear and rotating together with the second lower gear; and
a second door driving link having one end rotatably connected to the other end of the first door driving link and the other end rotatably connected to the connecting link.

8. The LiDAR system of any one of claims 2 to 7, wherein the second link unit includes:
a first LiDAR driving link having one end connected to the second upper gear and rotating together with the second upper gear; and
a second LiDAR driving link having one end rotatably connected to the other end of the first LiDAR driving link and the other end rotatably connected to the LiDAR unit.

9. The LiDAR system of any one of claims 1 to 8,
wherein the guide groove includes a first movement section straightly disposed in a left-right direction behind the opening and a second movement section curvedly extending in a front-rear direction from the first movement section toward the opening, and
wherein the door includes guide pins connected to the guide grooves on upper and lower surfaces.

10. The LiDAR system of any one of claims 1 to 9, further comprising:
a guide bracket connected to a protrusion guide provided on each of both side surfaces of the LiDAR unit,
wherein the guide bracket is configured to guide forward and rearward sliding movement of the LiDAR.

11. A Light Detection and Ranging (LiDAR) system for vehicles, the LiDAR system comprising:
a housing having an opening formed in a front and guide grooves formed in each of upper and lower parts;
a door at the opening;
a LiDAR unit retractably housed in the housing;
a first link unit configured to slide the door;
a second link unit configured to slide the LiDAR unit;
a gear unit to transmit power; and
a processor configured to:
control the door to slide along the guide grooves and open and close the opening;
control the LiDAR unit to slide forward and rearward within the housing to be selectively exposed to the outside through the opening;
control the gear unit to transmit power of an actuator to the first link unit and the second link unit; and
control movement of the door and the LiDAR unit to move in conjunction with each other to be alternately disposed at the opening.

12. The LiDAR system of claim 11,
wherein the gear unit includes:
a first gear unit including a first shaft connected to the actuator, a first lower gear provided at a lower portion of the first shaft, and a first upper gear provided at an upper portion of the first shaft;
a second gear unit including a second shaft disposed in parallel with the first shaft, a second lower gear provided at a lower portion of the second shaft and engaged with to the first lower gear, and a second upper gear provided at an upper portion of the second shaft and engaged with the first upper gear, and
wherein the second lower gear is connected to the first link unit, and the second upper gear is connected to the second link unit.

13. The LiDAR system of claim 11 or 12,
wherein the guide groove includes a first movement section straightly disposed in a left-right direction behind the opening and a second movement section curvedly extending in a front-rear direction from the first movement section toward the opening, and
wherein the door includes guide pins connected to the guide grooves on upper and lower surfaces.

14. The LiDAR system of any one of claims 11 to 13, further comprising:
a guide bracket connected to a protrusion guide provided on each of both side surfaces of the LiDAR unit,
wherein the guide bracket is configured to guide forward and rearward sliding movement of the LiDAR unit.
